# EUROPÄISCHE PATENTSCHRIFT

(11) **EP 1 889 043 B1**
(45) Veröffentlichungstag und Bekanntmachung des Hinweises auf die Patenterteilung: **03.07.2013**
(21) Anmeldenummer: 06755287.7
(22) Anmeldetag: 23.05.2006
(51) Int. Cl.: G01N 27/414

(54) **ELEKTROCHEMISCHER SENSOR**
ELECTROCHEMICAL SENSOR
CAPTEUR ÉLECTROCHIMIQUE

(30) Priorität: 30.05.2005 EP 05104586
(43) Veröffentlichungstag der Anmeldung: 20.02.2008
(73) Patentinhaber: Mettler-Toledo AG, 8606 Greifensee (CH)
(72) Erfinder: BERNASCONI, Markus, CH-5012 Schönenwerd (CH); DEMUTH, Caspar, CH-8610 Uster (CH); VAN HALEN, Henk, NL-9406 LG Assen (NL); VAN DER TUIN, Jan, NL-9711 RC Groningen (NL)
(86) Internationale Anmeldenummer: PCT/EP2006/062517
(87) Internationale Veröffentlichungsnummer: WO 2006/128804

(56) Entgegenhaltungen:
- WO-A-2004/079355
- DE-A1- 4 115 398
- GB-A- 2 162 997
- US-A- 4 397 714
- US-A- 4 505 799
- US-A- 5 138 251
- US-A- 5 414 284
- US-A- 5 814 280
- BERGVELD P: "Thirty years of ISFETOLOGY - What happened in the past 30 years and what may happen in the next 30 years" SENSORS AND ACTUATORS B, ELSEVIER SEQUOIA S.A., LAUSANNE, CH, Bd. 88, Nr. 1, 1. Januar 2003 (2003-01-01), Seiten 1-20, XP004395007 ISSN: 0925-4005 in der Anmeldung erwähnt

## Beschreibung

Die Erfindung betrifft einen elektrochemischen Sensor mit einem ionensensitiven Feldeffekttransistor (ISFET).

Elektrochemische Sensoren mit einem ISFET als Sensorelement zeichnen sich dadurch aus, dass sie mechanisch sehr stabil und im Vergleich zu den Glaselektroden nahezu unzerbrechlich sind. Diese Eigenschaften begünstigen den Einsatz von derartigen Sensoren in Bereichen wie beispielsweise der Lebensmittelindustrie und der pharmazeutischen Industrie. Insbesondere da in einigen industriellen Bereichen aufgrund von gesetzlichen Vorschriften der Einsatz von Glaselektroden wegen der Gefahr von Glasbruch nicht mehr zulässig ist oder zumindest in Frage gestellt wird.

Elektrochemische Sensoren mit einem ISFET können je nach Ausgestaltung zur Bestimmung verschiedener Substanzen und insbesondere zur pH-Bestimmung eingesetzt werden

In der Regel besteht ein ISFET aus einer FET-Grundstruktur (FET, Feldeffekttransistor) und unterschiedlichen, schichtweise auf diese Grundstruktur aufgebrachten Materialien. Eine FET-Grundstruktur umfasst ein Substrat, beispielsweise einen Siliziumeinkristall, in dem ein Source-Bereich, ein Drain-Bereich und ein zwischen diesen Bereichen angeordneter leitender Kanal ausgebildet sind.

Ein Verfahren und eine Schaltung zur Messung der Ionenaktivität in Flüssigkeiten unter Verwendung eines ISFET wird in der DE 3 116 884 A1 offenbart. Der ISFET weist eine Isolierschicht auf, welche die Funktion einer ionensensitiven Schicht hat und den leitenden Kanal bedeckt, so dass ein dem Medium zugewandter ionensensitiver Gate-Bereich oberhalb des leitenden Kanals ausgebildet wird.

Ein Sensor mit einem Sensorgehäuse, welches den Sensor unter Auslassung zumindest eines Gate-Bereichs mediumsdicht abschliesst und gleichzeitig eine spannungsfreie Anordnung des ISFET ermöglicht, wird zum Beispiel in der EP 1 396 718 A1 offenbart.

Die Herstellung von ionensensitiven Feldeffekttransistoren ist ein aufwändiger Prozess und umfasst das schichtweise Auftragen verschiedener Materialien, insbesondere oxidischer und metallischer Materialien. Die einzelnen Schichten werden zumindest teilweise vor dem Auftragen der nächsten Materialschicht bearbeitet und/oder strukturiert, beispielsweise durch nasschemisches Ätzen oder photolithographische Verfahren. Diese funktionsbedingte Strukturierung der verschiedenen Schichten des ISFET macht den Einsatz von speziellen und komplexen Masken notwendig. Weiterentwicklungen im Bereich von Sensoren mit ionensensitiven Feldeffekttransistoren finden vor allem durch Variationen der für den ISFET verwendeten Schichtmaterialien statt.

Ein ISFET für einen pH-Sensor mit einer sich über ihre Schichtdicke kontinuierlich verändernden ionenselektiven Schicht aus einem Metalloxidnitridgemisch ist beispielsweise in der WO 2004/079355 A1 beschrieben.

Die US 5,814,280 A offenbart einen pH-Sensor mit einem ISFET, welcher eine Aluminiumoxidschicht als ionensensitive Schicht aufweist, die nach Abtragung der dotierenden Schicht auf einem Bereich der FET-Grundstruktur aufgebracht wird, welcher den Source- und den Drain-Bereich umfasst.

Eine weitere Variante von Sensoren mit Feldeffekttransistoren stellen die so genannten Biosensoren dar. Diese Sensoren weisen im Gate-Bereich eine Schicht auf, meist einen Biofilm oder eine biologische Membran, welche sensitiv gegenüber bestimmten biologischen und/oder biochemischen Stoffen in einer Lösung ist. Ein Verfahren zur Herstellung eines Biosensors, welcher im Gate-Bereich zusätzlich eine biologische oder biochemische Membran aufweist, ist in der DE 41 15 398 A1 offenbart. Als sensitive Membran werden hier vor allem extrem dünne und empfindliche Langmuir-Blodgett-Filme verwendet, welche um das Einreissen der Filme zu vermeiden, auf einer im Gate-Bereich planaren Siliziumnitridschicht aufgebracht werden. Source- und Drain-Bereich werden hier durch ein Ionenimplantationsverfahren im Substrat ausgebildet.

In der Regel weist ein ISFET mehrere auf einer FET-Grundstruktur aufgebrachte Materialschichten auf. Die Materialschichten umfassen meist eine Feldoxidschicht sowie mindestens eine Schicht mit ionensensitiven und/oder isolierenden Eigenschaften. Die Feldoxidschicht wird direkt auf die FET-Grundstruktur aufgebracht und anschliessend wird die ionensensitive Schicht zumindest auf den Gate-Bereich aufgebracht.

Die bekannten Sensoren mit einem ISFET sind im Allgemeinen zwar mechanisch stabil, werden aber durch aggressive Medien, insbesondere durch starke Laugen, angegriffen, wodurch die Sensoren sogar zerstört werden können. Dieses Verhalten erschwert und beschränkt den Einsatz herkömmlicher ISFET-Sensoren, vor allem, da starke Laugen gängige Mittel zur Reinigung von technischen Anlagen sind. Sie werden beispielsweise bei CIP-Verfahren (clean in place) eingesetzt. Gerade CIP- oder auch SIP-Verfahren (sterilize in place) können einen herkömmlichen ISFET innerhalb weniger Zyklen zerstören.

Um die Zerstörung des Sensors zu verzögern oder sogar zu vermeiden, werden zum Beispiel technisch aufwändige Wechselarmaturen eingesetzt, mit denen der Sensor als Schutz vor der Reinigungslösung während eines Reinigungsvorgangs aus der Produktionsanlage entfernt und in eine separate Kammer zurückgezogen werden kann. Derartige Vorrichtungen sind im Vergleich zur direkten Reinigung in der Anlage aufwändig, vergleichsweise teuer und beanspruchen mehr Platz als eine einfache Armatur. Zudem muss eine Wechselarmatur angesteuert und sowohl die Kammer als auch der Sensor separat mit einer anderen Methode gereinigt werden.

Es wäre daher vorteilhaft, einen elektrochemischen Sensor und vor allem einen ionensensitiven Feldeffekttransistor derart zu gestalten, dass der Sensor unter Prozessbedingungen gereinigt werden kann.

Daraus ergibt sich als Aufgabe die Entwicklung eines elektrochemischen Sensors mit einem ISFET mit erhöhter Beständigkeit gegenüber aggressiven Medien, insbesondere gegenüber Laugen.

Überraschenderweise hat sich gezeigt, dass die Beständigkeit eines elektrochemischen Sensors mit einem ISFET gegenüber Laugen erheblich erhöht werden kann, indem die Topographie, insbesondere der Aufbau und die Anordnung der auf einer FET-Grundstruktur angeordneten Materialschichten verändert wird.

Ein erfindungsgemässer elektrochemischer Sensor umfasst einen ISFET mit einer FET-Grundstruktur, welche einen Source-Bereich, einen Drain-Bereich und einen zwischen Source-Bereich und Drain-Bereich angeordneten leitender Kanal aufweist. Direkt auf der FET-Grundstruktur ist eine diese vollständig bedeckende erste Schicht und auf der ersten Schicht eine ionensensitive Schicht ausgebildet. Eine ESD-Schutzschicht (ESD; electrostatic discharge) grenzt den ISFET zu einem Messmedium hin ab, wobei die ESD-Schutzschicht eine einen Gate-Bereich ausbildende Aussparung oberhalb des leitenden Kanals aufweist, so dass der Gate-Bereich direkt mit dem Messmedium in Kontakt treten kann.

Die auf der FET-Grundstruktur ausgebildeten Schichten sind derart angeordnet, dass sowohl die erste Grenzfläche zwischen der FET-Grundstruktur und der ersten Schicht, als auch die zweite Grenzfläche zwischen der ersten Schicht und der ionensensitiven Schicht, als auch die Oberfläche der ionensensitiven Schicht zumindest in einem planaren Flächenbereich im Wesentlichen eben ausgestaltet sind. Der Begriff eben weist darauf hin, dass die Grenzflächen und die Oberfläche zumindest im planaren Flächenbereich stufen- und kantenfrei ausgebildet sind und eine sehr geringe Rauheit aufweisen. Der planare Flächenbereich erstreckt sich über einen inneren Flächenbereich hinaus, welcher durch eine Projektion des Source-Bereichs (25), des Drain-Bereichs (26) und des leitenden Kanals (13) auf den planaren Flächenbereich definiert ist.

Jede Grenzfläche sowie die Oberfläche der ionensensitiven Schicht weist einen eigenen planaren Flächenbereich auf. Da die die Grenzflächen und die Oberfläche bildenden Schichten sowie deren jeweiliger planarer Flächenbereich jedoch übereinander angeordnet sind, wird im Folgenden der Begriff planarer Flächenbereich im Singular verwendet.

Überraschenderweise hat sich gezeigt, dass ein elektrochemischer Sensor mit einem ISFET, welcher einen im Vergleich zum Gate-Bereich grossflächigen planaren Flächenbereich aufweist, eine erhöhte chemische Beständigkeit insbesondere gegenüber konzentrierten Laugen aufweist, da aufgrund der ebenen Ausgestaltung der unterschiedlichen Schichten im planaren Flächenbereich weder die erste Schicht noch die ionensensitive Schicht Kanten oder Stufen in Bereichen aufweisen, welche mit dem Medium in Kontakt treten. Bekannte ISFET weisen in der Regel derartige Kanten und/oder Stufen auf, welche durch die nachfolgen aufgebrachten Schichten meist nicht vollständig bedeckt werden, so dass sich beispielsweise Haarrisse und/oder Spalte bilden können, welche Angriffspunkte für ein Medium darstellen können. Aufgrund der ebenen Ausgestaltung werden diese Angriffsfläche für aggressive Medien stark reduziert und die Beständigkeit des Sensors wesentlich verbessert.

Ein erfindungsgemässer Sensor zeichnet sich zusätzlich dadurch aus, dass die Schichten, vor allem die erste Schicht, die ionensensitive Schicht und die ESD-Schicht, zumindest im planaren Flächenbereich zueinander und zur FET-Grundstruktur planparallel angeordnet sind.

Die planparallele Anordnung wirkt sich günstig auf die ebene Ausbildung der Grenzflächen und der Oberfläche dieser Schichten und damit auf die Erhöhung der chemischen Beständigkeit des ISFET aus.

In einem bevorzugten Ausführungsbeispiel weist der ISFET zusätzlich eine zwischen der ionensensitiven Schicht und der ESD-Schutzschicht angeordnete Pufferschicht auf. Diese Pufferschicht dient dazu, den Abstand zwischen der ESD-Schutzschicht und der FET-Grundstruktur zu vergrössem, wodurch die Qualität der Messsignale verbessert wird. Die Pufferschicht ist unter Auslassung des Gate-Bereichs auf der ionensensitiven Schicht ausgebildet, so dass die Pufferschicht eine Kante, deren Höhe der Schichtdicke der Pufferschicht entspricht, um den Gate-Bereich herum darstellt. Die den ISFET zum Messmedium hin abschliessende ESD-Schicht bedeckt die Pufferschicht vollständig, so dass der Gate-Bereich in einer durch die Pufferschicht und die ESD-Schutzschicht begrenzten Vertiefung liegt. Die Pufferschicht umfasst vorzugsweise Siliziumdioxid, allerdings können auch andere Isolatoren wie beispielsweise Magnesiumoxid, Titanoxid, Aluminiumnitrid, Siliziumnitrid und/oder Polymere eingesetzt werden.

Vorzugsweise weist der elektrochemische Sensor ein Sensorgehäuse mit einem Gehäuseaufsatz auf. Der Gehäuseaufsatz ist fest mit dem Sensorgehäuse verbunden und in Relation zum ISFET so angeordnet, dass dieser unter Aussparung eines mediumberührten Flächenbereichs mediumsdicht umschlossen wird.

Eine im Wesentlichen mediumsdichte Abdichtung des elektrochemischen Sensors schützt diesen vor allem gegen das Eindringen von beispielsweise Mess- oder Reinigungsmedien und damit gegen eine mögliche Zerstörung. Die Aussparung des mediumberührten Flächenbereichs, welcher unter anderem den Gate-Bereich umfasst, ist für eine Messung unerlässlich, da so eine Wechselwirkung zwischen dem Messmedium und dem Gate-Bereich sowie der ionensensitiven Schicht ermöglicht wird.

In einer vorteilhaften Ausgestaltung stellt der innere Flächenbereich, welcher durch eine Projektion des Gate-Bereichs, des Source-Bereichs und des Drain-Bereichs auf den planaren Flächenbereich definiert ist, einen Teil des mediumberührten Flächenbereichs dar. Der mediumberührte Flächenbereich, welcher durch die Aussparung im Gehäuseaufsatz definiert wird, stellt wiederum einen Teil des planaren Flächenbereichs dar, so das der eben ausgestaltete planare Flächenbereich zumindest teilweise innerhalb des Gehäuseaufsatzes angeordnet ist.

In einem weiteren Ausführungsbeispiel, weist der ISFET ausserhalb des planaren Flächenbereichs eine erhöhte Dicke auf, so dass eine Diode zur Kontaktierung des ISFET ausgebildet werden kann. Über die Diode können in der ESD-Schutzschicht auftretender Potentiale abgeleitet werden. Eine aufgrund der Verdickung entstehende Stufe oder Kante auf der dem Medium zugewandten Oberfläche des ISFET stellt die Begrenzung des planaren Flächenbereichs dar. Der ISFET wird derart im Sensorgehäuse angeordnet, dass die Stufe nach Einbau des ISFET vorzugsweise innerhalb des Sensorgehäuses oder zumindest unter diesem und/oder einer Dichtung liegt und keinen Kontakt mit dem Messmedium hat.

Die direkt auf der FET-Grundstruktur ausgebildete erste Schicht kann eine oder mehrere Teilschichten umfassen, insbesondere eine dielektrische und/oder eine Isolator-Teilschicht. Eine dielektrische Teilschicht dient dazu, ein Weiterdiffundieren der FET-Dotierung im Substrat während nachfolgender Beschichtungs-Vorgänge mit hohen Temperaturen zu verhindern.

Die eine oder mehreren Teilschichten können beispielsweise durch geeignete Beschichtungsverfahren oder durch Oxidation ausgebildet werden. Als Material können verschiedene Metalloxide, Metallnitride, Halbleiteroxide und Halbleitemitride eingesetzt werden, wie beispielsweise Siliziumdioxid, Magnesiumoxid, Titanoxid und Siliziumnitrid. Bevorzugt wird die Verwendung von Siliziumdioxid, da dieses Material sowohl als dielektrische Teilschicht als auch als Feldoxidteilschicht eingesetzt werden kann.

Vorzugsweise ist die erste Schicht als einheitliche Schicht aus einem Material ausgebildet, welches sowohl als Isolator als auch als dielektrische Teilschicht wirken kann, wie beispielsweise Siliziumdioxid.

In einem bevorzugten Ausführungsbeispiel weist der elektrochemischen Sensor einen ISFET mit einer pH-sensitiven Schicht auf, welche vorzugsweise ein Aluminiumoxid aufweist. Weitere verwendbare ionensensitive Materialien umfassen beispielsweise Metalloxide wie Tantalpentoxid, Zinnoxid, Zirkonoxid, Siliziumdioxid und Hafniumoxid; Carbonitride; Metallnitride; Siliziumnitride; Metallsilikate; amorphen Kohlenstoff und diamantartigen Kohlenstoff (diamond like carbon) sowie Mischungen dieser Materialien.

Die ESD-Schutzschicht ist in der Regel eine metallische Schicht, welche dazu dient, elektrostatische Einwirkungen vom ISFET und insbesondere vom Gate abzuleiten. Insbesondere werden Metalle verwendet welche sowohl chemisch als auch mechanisch stabil sind, wie beispielsweise Silber, Platin, Titan, Gold und Mischungen daraus. Bevorzugt wird eine Titan-Platin-Legierung verwendet, wobei für eine bessere Haftung zunächst eine reine Titan-Schicht aufgebracht wird und diese mit einer Titan-Platin-Legierung bedeckt wird.

Die Herstellung eines ISFET für einen elektrochemischen Sensor umfasst mehrere Schritte. Zunächst wird auf einer Oberfläche eines Substrats oxidativ eine Feldoxidschicht erzeugt. Auf dieser Schicht wird eine dotierende Schicht ausgebildet und strukturiert. Die Dotierung erfolgt vorzugsweise durch Tempern. Nach der Dotierung wird auf dem Substrat durch vollständiges Abtragen der dotierenden Schicht und der Feldoxidschicht ein planarer Flächenbereich ausgebildet. Anschliessend wird eine im planaren Flächenbereich ebene erste Schicht aus einer oder mehreren Teilschichten ausgebildet. Auf diese erste Schicht wird eine ionensensitive Schicht aufgebracht, welche ebenfalls im planaren Flächenbereich eben ausgestaltet ist.

Die dotierende Schicht wird dabei in der Regel aus mindestens einer strukturierten, n-dotierenden Schicht und mindestens einer strukturierten, p-dotierenden Schicht (15) ausgebildet.

In einem Ausführungsbeispiel wird die ionensensitive Schicht zur Abschirmung gegen elektrostatische Einflüsse unter Auslassung eines Gate-Bereichs mit einer ESD-Schutzschicht bedeckt, welche den ISFET zum Medium hin abschliesst.

In einem weiteren Ausführungsbeispiel wird auf die ionensensitive Schicht, wiederum unter Auslassung des Gates-Bereichs, zunächst eine Pufferschicht aufgebracht, welche in einem zweiten Schritt vollständig von einer ESD-Schutzschicht bedeckt wird.

Zur Auftragung der unterschiedlichen Schichten können verschiedene Beschichtungsverfahren, wie CVD (chemical vapor deposition), PECVD (plasma enhanced chemical vapor deposition), thermisches Aufdampfen, Sputtern, reaktives Sputtern, reaktives Aufdampfen, Laser Ablation und Epitaxie verwendet werden.

Verschiedene Ausführungsbeispiele eines erfindungsgemässen elektrochemischen Sensors mit einem ISEFT werden in den folgenden Figuren dargestellt. Die Figuren sind zum besseren Verständnis teilweise stark vergrössert und nicht massstabsgetreu dargestellt. Es zeigen:
- Fig. 1: einen bekannten elektrochemischen Sensor im Längsschnitt;
- Fig. 2: einen Längsschnitt durch einen herkömmlichen ISFET in einem Sensorgehäuse;
- Fig. 3a-d: schematische Längsschnitte durch einen ISFET in unterschiedlichen Stadien der Herstellung;
- Fig. 3e: einen Längsschnitt durch einen ISFET mit einem planaren Flächenbereich und dessen Anordnung in Relation zu einem Gehäuseaufsatz;
- Fig. 4: einen Längsschnitt durch einen ISFET mit einem planaren Flächenbereich und einer zusätzlichen Pufferschicht, sowie dessen Anordnung in Relation zu einem Gehäuseaufsatz;
- Fig. 5: eine stark schematisierte Aufsicht auf einen erfindungsgemässen ISFET.

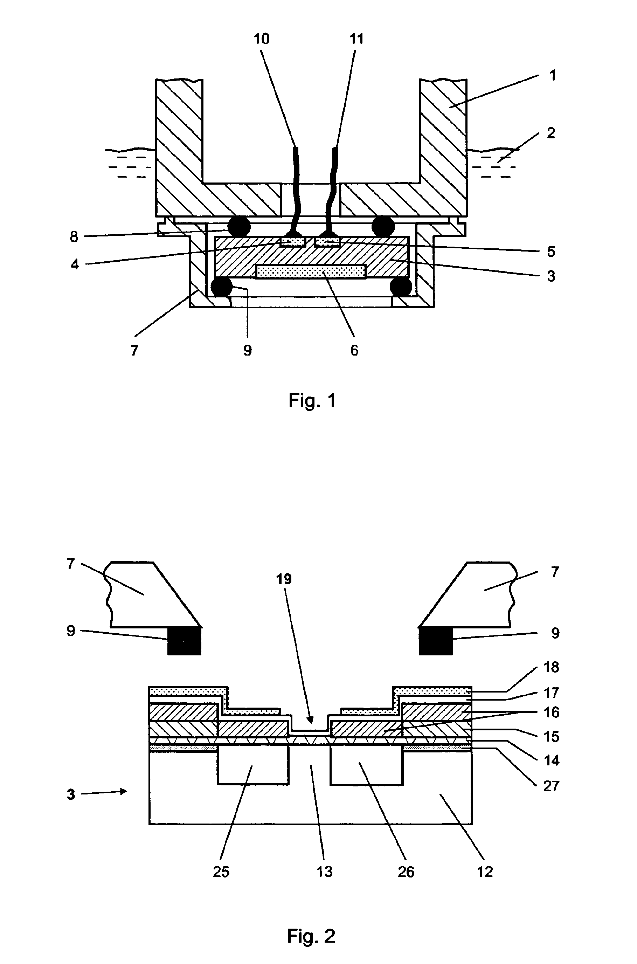

Zum besseren Verständnis der Anordnung eines ISFET in einem Sensor ist in Figur 1 der in ein Messmedium eintauchende Teil eines bekannten Sensors im Schnitt gezeigt. Der Sensor beinhaltet ein im Wesentlichen zylinderförmiges Sensorgehäuse 1 beispielsweise aus einem Kunststoff oder einem anderen geeigneten Material, wie Polyetheretherketon (PEEK) oder einem Metall, das in ein Messmedium 2 eintaucht. Der Sensor ist mit einem scheibenförmigen ionensensitiven Feldeffekttransistor 3 ausgestattet, der in diesem Ausführungsbeispiel rückseitig, auf der dem Messmedium 2 abgewandten Seite, einen Source-Anschluss 4 und einen Drain-Anschluss 5 und frontseitig, auf der dem Messmedium 2 zugewandten Seite einen mit dem Messmedium 2 in Kontakt stehenden, den Gate-Bereich umfassenden mediumberührten Flächenbereich 6 aufweist.

Der ISFET 3 ist in einem Gehäuseaufsatz 7 derart zwischen zwei Dichtungen 8, 9 gelagert, dass der mediumberührte Flächenbereich 6 mit dem Messmedium 2 in Kontakt steht und der ISFET 3 gleichzeitig spannungsfrei im Gehäuseaufsatz 7 angeordnet ist. Der Gehäuseaufsatz 7 besteht vorzugsweise aus demselben Material wie das Sensorgehäuse 1 und wird mit diesem durch ein geeignetes Verfahren, wie beispielsweise Ultraschallschweissen, Laserschweissen oder eine andere Art von Vibrations-Schweissen, fest verbunden. Die Dichtungen 8, 9 sind vorzugsweise als umlaufende O-Ringe ausgestaltet. Die Dichtung 9 dichtet den ISFET 3 unter Aussparung zumindest des mediumberührten Flächenbereichs 6 gegenüber dem Messmedium 2 ab. Die zweite Dichtung 8 liegt zwischen dem ISFET 3 und dem Sensorgehäuse 1, sie dichtet nochmals den Source-Anschluss 4 und Drain-Anschluss 5 gegen möglicherweise eindringendes Messmedium 2 ab und dient auch dazu, den ISFET 3 spannungsfrei im Sensor zu lagern.

Der Source-Anschluss 4 bzw. der Drain-Anschluss 5 sind in einem mittigen, dem Sensorgehäuse 1 zugewandten Bereich des ISFET 3 angeordnet und jeweils an einen Ableitungsdraht 10, 11 angeschlossen. Die Ableitungsdrähte 10, 11 werden durch eine Öffnung im Sensorgehäuse 1 zu einer hier nicht dargestellten Messvorrichtung geführt.

In Figur 2 ist der Aufbau eines bekannten ionensensitiven Feldeffekttransistors 3 in einem Sensorgehäuse im Längsschnitt gezeigt. Zur Verdeutlichung ist der ISFET 3 in Relation zum dem Messmedium zugewandten Teil des Gehäuseaufsatzes 7 stark vergrössert dargestellt. Die Darstellung ist nicht massstabsgetreu und die Position des Gehäuseaufsatzes 7 ist nur angedeutet. Für einen mediumsdichten Abschluss, würde die Dichtung 9 des Gehäuseaufsatzes 7 in Kontakt mit dem ISFET stehen, um ein Eindringen des Mediums zu verhindern.

Der ISFET 3 ist schichtartig auf einer FET-Grundstruktur aufgebaut. In einem Substrat 12 sind ein n-dotierter Source-Bereich 25, ein n-dotierter Drain-Bereich 26 und ein p-dotierter Bereich 27 derart ausgebildet, dass zwischen dem Source-Bereich 25 und dem Drain-Bereich 26 ein leitender Kanal 13 verläuft. Bekannte FET-Grundstrukturen umfassen häufig einen dotierten Siliziumeinkristall als Substrat 12, wobei sowohl npnals auch pnp-Dotierungen bekannt sind. Für die exakte Schaltung eines ISFET sei an dieser Stelle auf bekannte Literatur, wie P. Bergveld, Thirty Years of ISFETOLOGY, Sensors and Actuators B, 88, 1-20 (2003) und darin zitierte Publikationen, verwiesen.

Die FET-Grundstruktur wurde erzeugt, indem auf der gesamten Oberfläche des Substrats 12 eine Feldoxidschicht 14 ausgebildet wurde, welche aus Siliziumdioxid besteht und eine Schichtdicke zwischen etwa 40 und etwa 150 nm aufweist. Die Feldoxidschichtschicht 14 kann beispielsweise oxidativ oder durch geeignete Beschichtungsverfahren erzeugt werden. Anschliessend wurde eine strukturierte, dotierende Schicht ausgebildet. Die dotierende Schicht umfasst mindestens eine p-dotierende Schicht 15 und eine n-dotierende Schicht 16, welche beispielsweise mit Phosphor oder Bor dotiertes Siliziumdioxid aufweisen. Die p-dotierende Schicht 15 wurde zunächst auf der gesamten dem Messmedium zugewandten Oberfläche des Substrats 12 ausgebildet und in einem weiteren Arbeitsschritt strukturiert und dabei teilweise wieder abgetragen. Auf die strukturierte, p-dotierende Schicht 15 wurde anschliessend die n-dotierende Schicht 16 aufgetragen und ebenfalls strukturiert. Durch die Strukturierung der Schichten 15, 16 wurden auf der Oberfläche des Substrats 12 n-dotierte und p-dotierte Bereiche, sowie eine Vertiefung ausgebildet. Die Vertiefung befindet sich bezogen auf die Zeichnung oberhalb des leitenden Kanals 13 und gibt die Lage des Gate-Bereichs 19 an. Die Schichtdicken der dotierenden Schichten 15, 16 liegen im Allgemeinen jeweils zwischen 150 und 300 nm. In einem weiteren Schritt wurde das Substrat 12 unter Ausbildung des Source-Bereichs 25, des Drain-Bereichs 26 und des p-dotierten Bereichs 27 dotiert. Die Dotierung erfolgte durch thermisches Erhitzen des Substrats 12 und der darauf ausgebildeten Schichten 15, 16. Auf die so erzeugte FET-Grundstruktur wurden anschliessend weitere Schichten aufgetragen.

Auf die FET-Grundstruktur wurde eine gleichmässig dicke, ionensensitive Schicht 17 aufgebracht. Die ionensensitive Schicht besteht vorzugsweise aus Aluminiumoxid und weist eine Dicke zwischen 50 und 100 nm auf. Die ionensensitive Schicht 17 bedeckt den Gate-Bereich 19, sowie die diesen begrenzenden Kanten. Die Gesamtdicke der oberhalb des leitenden Kanals 13 aufgebrachten Schichten beeinflusst das elektrische Feld, welches sich während des Betriebs des ISFET ausbildet.

Zur Abschirmung des ISFET 3 gegen störende elektrostatische Entladungen wurde die ionensensitive Schicht 17 mit Aussnahme des Gate-Bereichs 19 mit einer metallischen ESD-Schutzschicht 18 (ESD; electrostatic discharge) bedeckt. Die ESD-Schutzschicht 18 ist so ausgestaltet, dass sie den Gate-Bereich 19 begrenzt.

Auf die ESD-Schicht 18 kann zum Schutz des ISFET zusätzlich eine Oxidschicht und/oder eine Kunststoffschicht aufgebracht werden.

Zur Abdichtung und Kapselung des ISFET 3 wird dieser in ein Sensorgehäuse (s. Figur 1) eingebracht, von dem hier nur der Gehäuseaufsatz 7 dargestellt ist. Der Gehäuseaufsatz 7 weist mindestens eine Dichtung 9 auf, welche den ISFET 3 sowohl mediumsdicht umschliesst, als auch den Kontakt zwischen dem Gate-Bereich 19 und dem Messmedium ermöglicht. Die Dichtung 9 ist zum Beispiel ein O-Ring, welcher einen mediumberührten Flächenbereich definiert.

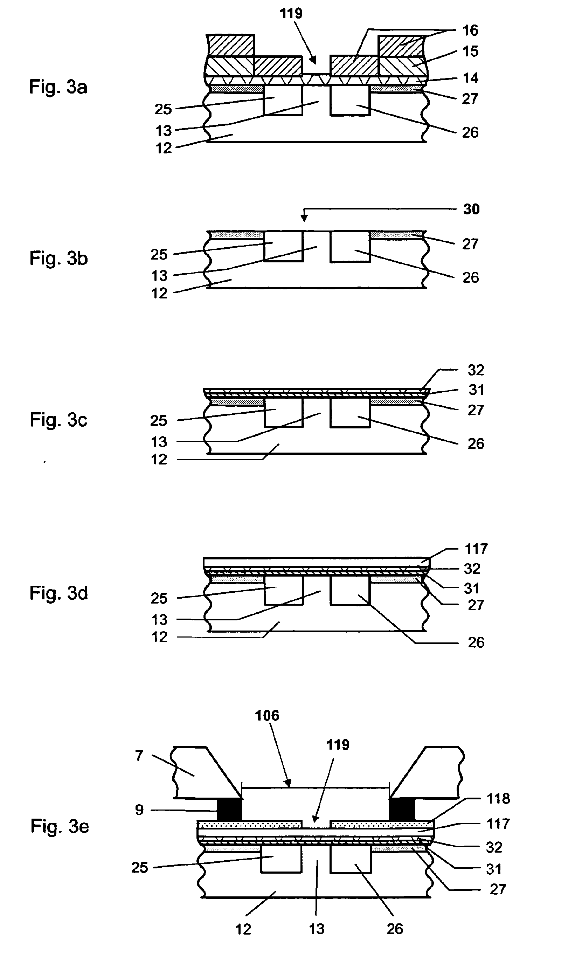

Wie die Praxis zeigt, werden bekannten Sensoren mit einem ionensensitiven Feldeffekttransistor von aggressiven chemischen Medien, insbesondere von höher konzentrierten Laugen angegriffen. Überraschenderweise lässt sich die Beständigkeit der ISFET-Sensoren gegenüber derartigen Bedingungen durch eine Veränderung des ionensensitiven Feldeffekttransistors und insbesondere durch eine Veränderung der Topographie, der Schichtfolge und der Strukturierung der Schichten in Kombination beeinflussen. Ein verbesserter Sensor und einige Zwischenschritte bei dessen Herstellung sind in den Figuren 3 bis 5 gezeigt, wobei gleiche Merkmale mit gleichen Bezugszeichen versehen sind.

Figur 3a zeigt die FET-Grundstruktur eines ISFET, welche im Wesentlichen der FET-Grundstruktur des in Figur 2 gezeigten ISFET entspricht. Im Substrat 12 sind der Source-Bereich 25, der Drain-Bereich 26, der p-dotierte Bereich 27 und der leitenden Kanal 13 ausgebildet. Auf dem Substrat 12 wurde eine Feldoxidschicht 14 erzeugt, welche von den dotierenden Schichten 15, 16 unter Auslassung des Gate-Bereichs 119 bedeckt ist.

Zur Erzeugung eines erfindungsgemässen Sensors, werden die auf die FET-Grundstruktur aufgebrachten Schichten (14, 15, 16) zunächst vollständig entfernt, so dass ein ebener planarer Flächenbereich 30 von äusserst geringer Rauheit entsteht (s. Figur 3b), welche im Wesentlichen nur das dotierte Substrat 12 umfasst. Die Abtragung der dotierenden Schichten 15, 16 und der Feldoxidschicht 14 erfolgt beispielsweise durch chemisches Ätzen.

Auf dieser ebenen, planaren Oberfläche 30 wird eine erste Schicht erzeugt, welche hier eine dielektrische Teilschicht 31 und eine Isolatorteilschicht 32 umfasst (s. Figur 3c). Die Teilschichten 31, 32 werden beispielsweise mittels eines geeigneten Beschichtungsverfahrens, wie CVD (chemical vapor deposition), PECVD (plasma enhanced chemical vapor deposition), thermisches Aufdampfen, Sputtern, reaktives Sputtern, reaktives Aufdampfen, Laser Ablation und Epitaxie, aufgebracht. Die beiden Teilschichten 31, 32 weisen vorzugsweise Siliziumdioxid auf. Die die beiden Teilschichten 31, 32 umfassende erste Schicht weist eine gleichmässige Schichtdicke auf, welche zwischen etwa 50 und etwa 100 nm liegt.

In einem weiteren Schritt, welcher in Figur 3d gezeigt ist, wird die erste Schicht 31, 32 mit einer ionensensitiven Schicht 117 bedeckt, welche vorzugsweise Aluminiumoxid mit einer Schichtdicke von etwa 50 bis 100 nm aufweist.

Die Teilschichten 31, 32 sowie die ionensensitive Schicht 117 zeichnen sich dadurch aus, dass sie einerseits planparallel zueinander und zum Substrat 12 angeordnet sind und anderseits ebene Grenzflächen bzw. ebene Oberflächen aufweisen. Da die Schichten auf einer ebenen, planaren Oberfläche 30 aufgebracht werden, wird die Oberflächenrauheit der einzelnen Schichten im Wesentlichen durch das Beschichtungsverfahren bestimmt und liegt in einem Bereich unterhalb von 10 nm, vorzugsweise sogar unterhalb von 3 nm.

Zur Abschirmung wird mit Ausnahme eines Gate-Bereichs 119 die ionensensitive Schicht 117 mit einer ESD-Schutzschicht 118 bedeckt (s. Figur 3e). Die ESD-Schutzschicht 118 ist vorzugsweise eine Titan-Platin-Titan-Schicht mit einer Dicke zwischen etwa 30 bis 300 nm, welche eine Titan-Schicht und eine Schicht aus einer Platin-Titan-Legierung umfasst. Titan wirkt dabei als eine Art Haftvermittler zwischen der ionensensitiven Schicht 117 und der Titan-Platin-Legierung.

Zur Messung wird der ISFET in ein Sensorgehäuse eingebaut, wie es in Figur 1 gezeigt wurde. Zur Verdeutlichung ist in Figur 3e die Lage des Gehäuseaufsatzes 7 in Relation zum verbesserten ISFET gezeigt. Die Darstellung ist nicht massstabsgetreu.

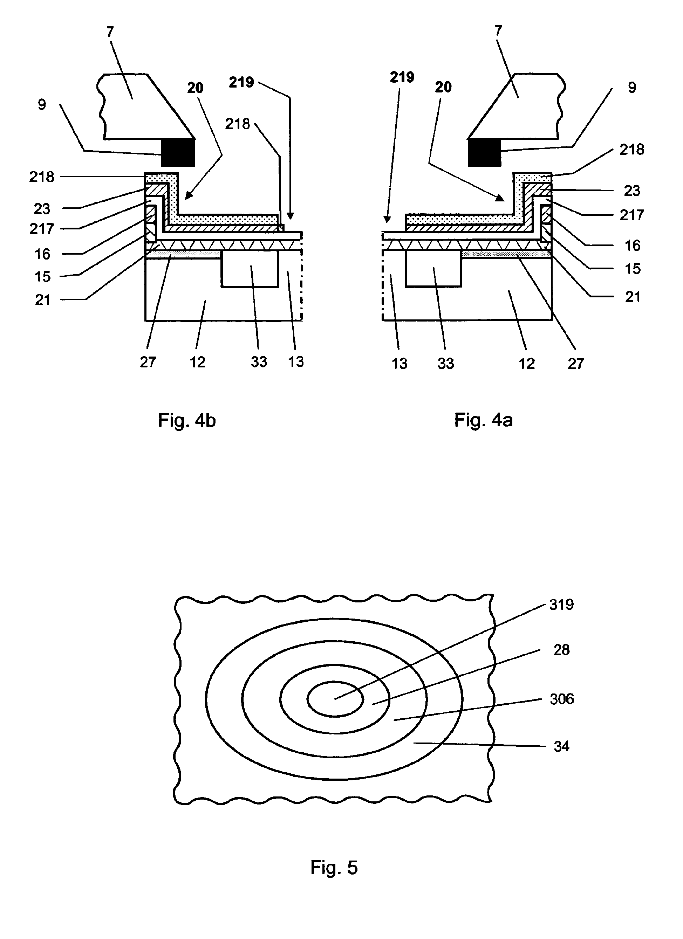

Auf dem ISFET, genauer auf der ESD-Schicht 118 wird die Dichtung 9 des Gehäuseaufsatzes 7 angeordnet, so dass kein Medium in den Gehäuseaufsatz 7 eindringen kann. Die Dichtung 9 ist beispielsweise ein O-Ring, dessen Innendurchmesser den mediumberührten Flächenbereich 106 begrenzt, welcher sowohl den Gate-Bereich 119, als auch den inneren Flächenbereich einschliesst. Der innere Flächenbereich umfasst dabei den Source-Bereich 25, den Drain-Bereich 26 und den leitenden Kanal 13 (s. a. Figur 5).

Ein Vergleich des in Figur 3e gezeigten verbesserten Sensors mit dem bekannten Sensor aus Figur 2 zeigt deutlich, dass die Teilschichten 31, 32 der ersten Schicht und die ionensensitive Schicht 117 eben ausgestaltet sind und im mediumberührten Bereich 106 keine Kanten oder Stufen aufweisen, wodurch dem mit dem ISFET in Kontakt tretenden Medium kaum Angriffsmöglichkeiten geboten werden.

Weitere bevorzugte Ausführungsbeispiele des Sensors sind in den Figuren 4a und 4b gezeigt. Die Figuren 4a und 4b zeigen jeweils eine Hälfte zweier sehr ähnlich aufgebauter Sensoren im Schnitt und werden im Wesentlichen gemeinsam beschrieben.

Ein ISFET besteht wie bereits in den Figuren 3a-e beschrieben aus einer FET-Grundstruktur, wobei hier entweder der Source-Bereich 33 oder der Drain-Bereich 33 dargestellt ist. Allerdings wurden die dotierenden Schichten 15, 16 und der Feldoxidschicht nicht vollständig abgetragen, sondern nur ein ebener planarer Flächenbereich geschaffen. Die Reste der dotierenden Schichten 15, 16 begrenzen den planaren Flächenbereich und bedingen, dass der ISFET seitlich eine erhöhte Schichtdicke aufweist. Die Gewährleistung einer seitlichen Mindestschichtdicke ist vor allem zur Ausbildung einer Diode am äusseren Rand des ISFET wichtig. Die Diode ist ausserhalb des planaren Flächenbereichs angeordnet.

Nach Erzeugung des planaren Flächenbereichs wird eine einheitliche, Siliziumdioxid aufweisende erste Schicht 21 auf der FET-Grundstruktur erzeugt und eine Aluminiumoxid umfassende ionensensitive Schicht 217 aufgebracht.

Die ionensensitive Schicht 217 ist im planaren Flächenbereich eben und planparallel zum Substrat und zur ersten Schicht ausgebildet. Gleichzeitig bedeckt die ionensensitive Schicht 117, die Reste der dotierenden Schichten 15, 16 unter Ausbildung einer Stufe 20.

Bevor die ESD-Schutzschicht 218 aufgebracht wird, wird die ionensensitive Schicht 217 noch mit einer Pufferschicht 23 unter Aussparung des Gate-Bereichs 219 bedeckt. Die Pufferschicht 23 ist zwischen 500 und 900 nm dick und besteht vorzugsweise aus Siliziumdioxid. Die Pufferschicht 23 dient dazu, negative Einflüsse auf das Messergebnis zu minimieren, welche durch einen zu geringen Abstand zwischen der ESD-Schutzschicht 218 und der FET-Grundstruktur entstehen können.

Als Abschluss zum Messmedium hin, wird der ISFET unter Auslassung des Gate-Bereichs 219 wiederum mit einer metallischen ESD-Schutzschicht 218 bedeckt, deren bevorzugte Zusammensetzung bereits beschrieben wurde. Die ESD-Schutzschicht weist eine Schichtdicke von etwa 40 bis 60 nm auf.

Die Figuren 4a und 4b zeigen zwei Varianten des ISFET mit einer ESD-Schutzschicht 218 sowie dessen Anordnung in Relation zum Gehäuseaufsatz 7. Der ISFET ist stark vergrössert dargestellt und die Position des Gehäuseaufsatzes 7 ist nur angedeutet. Im Betrieb würde die Dichtung 9 des Gehäuseaufsatzes 7 Kontakt mit dem ISFET haben und so ein Eindringen des Mediums in den Gehäuseaufsatz 7 verhindern.

In Figur 4a bedeckt die ESD-Schutzschicht 218 die Pufferschicht 23 vollständig. Der Gate-Bereich 219 wird durch die Pufferschicht 23 und die ESD-Schicht 218 begrenzt. Damit einem mit dem ISFET in Kontakt tretenden Medium möglichst wenig Angriffspunkte gegeben werden, wird der ISFET derart vom Gehäuseaufsatz 7 umschlossen, dass die Stufe 20 hinter der Dichtung 9 liegt und damit im Inneren des Gehäuseaufsatzes 7.

Figur 4b zeigt eine weitere vorteilhafte Ausgestaltung des ISFET. Hier wird die ESD-Schutzschicht 218 mit einer leicht veränderten Maske aufgetragen, so dass die ESD-Schicht 218 nicht nur die Pufferschicht 23 vollständig bedeckt, sondern zusätzlich den Rand der Pufferschicht 23, welcher die Begrenzung des Gate-Bereichs 219 bildet. In dieser Ausgestaltung treten nur die ESD-Schutzschicht 218 und der im Gate-Bereich 219 ausgebildete Teil der ionensensitiven Schicht 217 mit dem Medium in Kontakt. Die metallische ESD-Schutzschicht 218 stellt so einen zusätzlichen Schutz der - Pufferschicht 23 gegenüber aggressiven Medien dar.

Weiterhin ist in Figur 4b eine alternative Einbaumöglichkeit des ISFET in ein Sensorgehäuse gezeigt. Die Dichtung 9 des Gehäuseaufsatzes 7 ist in Bezug auf die Zeichnung direkt oberhalb der Stufe 20 angeordnet, so dass die Stufe 20 im Betrieb unter der Dichtung 9 liegt. Aufgrund der geringen Dimensionen der Stufe 20 im Vergleich zur Dichtung 9, wird der ISFET auch in dieser Anordnung im Wesentlichen mediumsdicht umschlossen. Nur ein kleiner Teil des planaren Flächenbereichs liegt unter bzw. innerhalb des Gehäuseaufsatzes 7.

Zur Verdeutlichung der Anordnung der unterschiedlichen Flächenbereiche eines ISFET ist in Figur 5 eine schematische Aufsicht auf einen ISFET dargestellt. Die unterschiedlichen Flächenbereiche sind hier elliptisch dargestellt, wobei sie prinzipiell beliebig geformt sein können. In der Produktion wird eine kreisförmige oder elliptische Ausgestaltung bevorzugt. Die unterschiedlichen Flächenbereiche sind ineinander verschachtelt. Um einen Gate-Bereich 319 ist ein innerer Flächenbereich 28 angeordnet, welcher den Source-Bereich und den Drain-Bereich umfasst und als Projektion dieser Bereiche auf einen planaren Flächenbereich definiert ist. Der innere Flächenbereich 28 stellt wiederum einen Teil des mediumberührten Flächenbereichs 306 dar, welcher durch die Position des Gehäuseaufsatzes, insbesondere der Dichtung, definiert wird (s. Figuren 3d, 4a und 4b). Der planare Flächenbereich 34, in dem die erste Schicht und die ionensensitive Schicht im Wesentlichen eben ausgestaltet sind, erstreckt sich über den mediumberührten Flächenbereich 306 hinaus und ist im elektrochemischen Sensor zumindest teilweise im Gehäuseaufsatz angeordnet.

Im Folgenden wird die Herstellung eines erfindungsgemässen ISFET beschrieben. Die FET-Grundstruktur wird analog zu anderen bekannten ISFET hergestellt. Auf einer Oberfläche, welche beim fertigen ISFET die dem Messmedium zugewandte Oberfläche darstell, eines Substrats, insbesondere eines undotierten oder ein n-dotierten Siliziumeinkristalls, wird zunächst eine Feldoxidschicht ausgebildet. Anschliessend wird eine dotierende Schicht ausgebildet und strukturiert. Die dotierende Schicht entsteht durch die Auftragung von mindestens zwei unterschiedlich dotierter Siliziumdioxid-Schichten, welche jeweils durch gezieltes chemisches Ätzen oder photolithographische Verfahren strukturiert werden.

Die dotierende Schicht wird aus mindestens zwei ebenfalls strukturierten Schichten ausgebildet. Es wird eine p-dotierende Schicht aufgebracht, welche beispielsweise durch photolithographische Verfahren und/oder chemisches Ätzen strukturiert wird, so dass auf der Substrat-Oberfläche inselartige p-dotierte Bereiche verbleiben. Anschliessend wird unter Verwendung derselben Techniken und Verfahrensschritte eine n-dotierende Schicht ausgebildet, so dass die dotierende Schicht nun n- und p-dotierte Bereiche aufweist. Bekanntermassen dient als Material für die dotierende Schicht häufig mit Phosphor oder Bor dotiertes Siliziumdioxid.

Zur Dotierung wird das Substrat zusammen mit der auf einer seiner Oberflächen ausgebildeten dotierenden Schicht getempert, wodurch die Dotieratome der dotierenden Schicht zumindest teilweise in das Substrat hinein diffundieren. Die dotierende Schicht ist derart strukturiert, dass während des Erhitzens durch Diffusion der Dotieratome in das Substrat zumindest ein definierter Source-Bereich und ein definierter Drain-Bereich ausgebildet werden.

Bei einem erfindungsgemässen ISFET wird die dotierende Schicht zur Schaffung eines ebenen planaren Flächenbereichs auf der FET-Grundstruktur beispielsweise durch chemisches Ätzen wieder entfernt. Entweder werden die Schichten vollständig entfernt oder zumindest innerhalb des planaren Flächenbereichs.

Anschliessend wird eine erste Schicht in einer oder mehreren Teilschichten aufgebracht, welche insbesondere im planaren Flächenbereich planparallel zum Substrat, kanten- und stufenfrei und weitestgehend eben ausgestaltet ist.

Direkt auf die erste Schicht wird eine ionensensitive Schicht ausgebildet, welche Aluminiumoxid aufweist. Die Rauheit der Oberfläche bzw. der Grenzflächen der auf der FET-Grundstruktur aufgebrachten ersten Schicht und ionensensitiven Schicht ist sehr gering und wird hauptsächlich durch das verwendeten Beschichtungsverfahren bestimmt. Diese beiden Schichten werden in der Regel nicht weiter strukturiert oder bearbeitet. Die Rauheit der Flächen liegt je nach Beschichtungsverfahren unterhalb von 10 nm und vorzugsweise sogar unterhalb von 3 nm.

Auf die ionensensitive Schicht wird nun entweder direkt eine ESD-Schutzschicht oder eine Pufferschicht und eine ESD-Schutzschicht aufgebracht. Diese Schichten werden derart aufgebracht, dass ein Gate-Bereich, welcher oberhalb des leitenden Kanals ausgebildet ist, ausgespart wird und direkt mit einem Medium wechselwirken kann. Die in den Ausführungsbeispielen beschriebenen ionensensitiven Feldeffekttransistoren umfassen eine bekannte FET-Grundstruktur auf Siliziumbasis. Prinzipiell können jedoch auch andere, bekannte FET-Grundstrukturen verwendet werden.

Die einzelnen Schichten können mittels verschiedener Techniken aufgetragen werden, wobei die Oxidschichten vorzugsweise mittels CVD-Verfahren und die metallischen Schichten mittels Sputtern aufgebracht werden. Die einzelnen Schichten werden bereits während der einzelnen Beschichtungsvorgänge, z.B. durch die Verwendung entsprechender Masken, durch nasschemisches Ätzen und/oder photolithografische Verfahren strukturiert. Der Begriff Strukturierung umfasst hier die Auftragung in vorgegebenen Mustern, sowie die Erzeugung von Vertiefungen und Aussparungen in den einzelnen Schichten.

Die in Figur 1 gezeigte, bekannte Ausführungsform eines Sensors mit einem ISFET weist eine Rückseitenkontaktierung auf. Die Kontakte befinden sich also auf der dem Medium abgewandten Seite des ISFET. Es ist selbstverständlich auch möglich, dass die vorgestellten ionensensitiven Feldeffekttransistoren eine Vorderseitenkontaktierung aufweisen bzw. die Kontakte an einer anderen bekannten Stelle auf dem ISFET angeordnet sind.

Die in Figur 1 gezeigte, bekannte Ausführungsform eines Sensors mit einem ISFET dient nur als Beispiel. Selbstverständlich können die hier vorgestellten ionensensitiven Feldeffekttransistoren auch in andere Sensorgehäuse und Sensoren eingebaut werden, bzw. auf andere Arten gegenüber dem Messmedium abgedichtet werden.

**Bezugszeichenliste**

| | |
|---|---|
| 1 | Sensorgehäuse |
| 2 | Messmedium |
| 3 | ISFET |
| 4 | Source-Anschluss |
| 5 | Drain-Anschluss |
| 6, 106, 306 | mediumberührter Flächenbereich |
| 7 | Gehäuseaufsatz |
| 8 | Dichtung |
| 9 | Dichtung |
| 10 | Ableitungsdraht |
| 11 | Ableitungsdraht |
| 12 | Substrat |
| 13 | leitender Kanal |
| 14 | Feldoxidschicht |
| 15 | dotierende Schicht (p-Siliziumdioxid) |
| 16 | dotierende Schicht (n-Siliziumdioxid) |
| 17, 117, 217 | ionensensitive Schicht |
| 18, 118, 218 | ESD-Schutzschicht |
| 19, 119, 219, 319 | Gate-Bereich |
| 20 | Stufe |
| 21 | erste Schicht |
| 23 | Pufferschicht |
| 25 | Source-Bereich |
| 26 | Drain-Bereich |
| 27 | dotierter Bereich (p-Siliziumdioxid) |
| 28 | innerer Flächenbereich |
| 30 | planarer Flächenbereich |
| 31 | dielektrische Teilschicht |
| 32 | Isolator-Teilschicht |
| 33 | Source- oder Drain-Bereich |
| 34 | planarer Flächenbereich |

## Patentansprüche

1. Elektrochemischer Sensor mit einem ISFET mit einer FET-Grundstruktur, welche einen Source-Bereich (25), einen Drain-Bereich (26) und einen zwischen Source-Bereich (25) und Drain-Bereich (26) angeordneten leitenden Kanal (13) umfasst; eine direkt auf der FET-Grundstruktur ausgebildete, diese vollständig bedeckende erste Schicht (21); eine auf der ersten Schicht (21) ausgebildete ionensensitive Schicht (117, 217); und eine ESD-Schutzschicht (118, 218), welche den ISFET zum Messmedium hin unter Aussparung eines Gate-Bereichs (119, 219, 319) abschliesst, aufweist; **dadurch gekennzeichnet, dass** sowohl die erste Grenzfläche zwischen der FET-Grundstruktur und der ersten Schicht (21), als auch die zweite Grenzfläche zwischen der ersten Schicht (21) und der ionensensitiven Schicht (117, 217), als auch die Oberfläche der ionensensitiven Schicht (117, 217) in einem planaren Flächenbereich im Wesentlichen eben ausgestaltet sind, wobei sich der planare Flächenbereich (34) über einen inneren Flächenbereich (28) hinaus erstreckt, welcher durch eine Projektion des Source-Bereichs (25), des Drain-Bereichs (26) und des leitenden Kanals (13) auf den planaren Flächenbereich definiert ist..

2. Elektrochemischer Sensor nach Anspruch 1, **dadurch gekennzeichnet, dass** die erste Schicht (21), die ionensensitive Schicht (117, 217) und die ESD-Schicht (118, 218) zumindest im planaren Flächenbereich (34) zueinander und zur FET-Grundstruktur planparallel angeordnet sind.

3. Elektrochemischer Sensor nach einem der Ansprüche 1 oder 2 **dadurch gekennzeichnet, dass** der ISFET eine zwischen der ionensensitiven Schicht (217) und der ESD-Schutzschicht (218) angeordnete Pufferschicht (23) aufweist.

4. Elektrochemischer Sensor nach einem der Ansprüche 1 bis 3 **dadurch gekennzeichnet, dass** der elektrochemische Sensor ein Sensorgehäuse (1) mit einem Gehäuseaufsatz (7) aufweist, wobei der Gehäuseaufsatz (7) in Relation zum ISFET so angeordnet ist, dass der ISFET unter Aussparung eines mediumberührten Flächenbereichs (106, 306) mediumsdicht umschlossen wird.

5. Elektrochemischer Sensor nach einem der Ansprüche 1 bis 4 **dadurch gekennzeichnet, dass** der planare Flächenbereich (34) den inneren Flächenbereich (28) und den mediumberührten Flächenbereich (106, 306) umfasst.

6. Elektrochemischer Sensor nach einem der Ansprüche 1 bis 5 **dadurch gekennzeichnet, dass** der ISFET ausserhalb des planaren Flächenbereichs (34) zur Kontaktierung eine erhöhte Dicke aufweist.

7. Elektrochemischer Sensor nach einem der Ansprüche 1 bis 6 **dadurch gekennzeichnet, dass** die erste Schicht eine oder mehrere Teilschichten (31, 32) umfasst.

8. Elektrochemischer Sensor nach einem der Ansprüche 1 bis 7 **dadurch gekennzeichnet, dass** die ionensensitive Schicht (117, 217) Aluminiumoxid aufweist.

9. Elektrochemischer Sensor nach einem der Ansprüche 1 bis 8 **dadurch gekennzeichnet, dass** die ESD-Schutzschicht (118, 218) eine metallische Schicht ist.

10. Verfahren zur Herstellung eines ISFET für einen elektrochemischen Sensor nach einem der Ansprüche 1 bis 9 mindestens die Schritte umfassend
- Erzeugen einer Feldoxidschicht (14) auf einem Substrat (12),
- Ausbilden und Strukturieren einer dotierenden Schicht (15, 16) auf einer Oberfläche des Substrats (12),
- Dotieren des Substrats (12) durch Tempern des Substrats (12) und der darauf ausgebildeten dotierenden Schicht (15, 16),
- Abtragen der dotierenden Schicht (15, 16) und der Feldoxidschicht (16) zur Erzeugung eines planaren Flächenbereichs (30),
- Erzeugen einer ersten Schicht (21), welche aus einer oder mehrerer Teilschichten (31, 32) erzeugt wird,
- Aufbringen einer ionensensitiven Schicht (117, 217).

11. Verfahren nach Anspruch 10 **dadurch gekennzeichnet, dass** die dotierende Schicht aus mindestens einer strukturierten, n-dotierenden Schicht (16) und mindestens einer strukturierten, p-dotierenden Schicht (15) ausgebildet wird.

12. Verfahren nach einem der Ansprüche 10 oder 11 **dadurch gekennzeichnet, dass** unter Auslassung eines Gate-Bereichs (119) eine ESD-Schutzschicht (118) auf die ionensensitive Schicht (117) aufgebracht wird.

13. Verfahren nach einem der Ansprüche 10 bis 12 **dadurch gekennzeichnet, dass** unter Auslassung eines Gate-Bereichs (219) eine Pufferschicht (23) und eine ESD-Schutzschicht (218) auf die ionensensitive Schicht (217) aufgebracht werden.

## Claims

1. Electrochemical sensor with an ISFET having a FET base structure, comprising a source area (25), a drain area (26), and a conductive channel (13) arranged between the source area (25) and the drain area (26), and further comprising a first layer (21) formed directly on the FET base structure and completely covering the latter, an ion-sensitive layer (117, 217) formed on top of the first layer (21), and an ESD-protection layer (118, 218) which closes off the ISFET against the measurement medium but leaves a gate area (119, 219, 319) uncovered, **characterized in that** the first boundary surface between the FET base structure and the first layer (21) as well as the second boundary surface between the first layer (21) and the ion-sensitive layer (117, 217) are substantially flat in a planar surface area, wherein said planar surface area (24) extends beyond an inner surface area (28) which is defined by a projection of the source area (25), the drain area (26) and the conductive channel (13) onto the planar surface area.

2. Electrochemical sensor according to claim 1, **characterized in that** the first layer (21), the ion-sensitive layer (117, 217) and the ESD layer (118, 218) are arranged plane-parallel to each other and to the FET base structure at least within the planar surface area (34).

3. Electrochemical sensor according to one of the claims 1 or 2, **characterized in that** the ISFET comprises a buffer layer (23) arranged between the ion-sensitive layer (217) and the ESD-protection layer (218).

4. Electrochemical sensor according to one of the claims 1 to 3, **characterized in that** the electrochemical sensor comprises a sensor housing (1) with a housing cap (7), wherein the housing cap (7) is arranged in relation to the ISFET in such a way that the ISFET is enclosed and sealed off from the medium except for a surface area (106, 306) that is in contact with the medium.

5. Electrochemical sensor according to one of the claims 1 to 4, **characterized in that** the planar surface area (34) comprises the inner surface area (28) and the surface area (106, 306) that is in contact with the medium.

6. Electrochemical sensor according to one of the claims 1 to 5, **characterized in that** the ISFET has outside of the planar surface area (34) an increased thickness for the contacting of the ISFET.

7. Electrochemical sensor according to one of the claims 1 to 6, **characterized in that** the first layer comprises one or more partial layers (31, 32).

8. Electrochemical sensor according to one of the claims 1 to 7, **characterized in that** the ion-sensitive layer (117, 217) comprises aluminum oxide.

9. Electrochemical sensor according to one of the claims 1 to 8, **characterized in that** the ESD-protection layer (118, 218) is a metallic layer.

10. Method of manufacturing an ISFET for an electrochemical sensor according to one of the claims 1 to 9, comprising at least the steps of
- producing a field oxide layer (14) on a substrate (12),
- forming and structuring a doping layer (15, 16) on a surface of the substrate (12),
- doping the substrate (12) by tempering the substrate (12) and the doping layer (15, 16) formed on it,
- removing the doping layer (15, 16) and the field oxide layer (16) in order to produce a planar surface area (30),
- producing a first layer (21) which is composed of one or more partial layers (31, 32), and
- depositing an ion-sensitive layer (117, 217).

11. Method according to claim 10, **characterized in that** the doping layer is formed of at least one structured, n-doped layer (16) and at least one structured p-doped layer (15).

12. Method according to one of the claims 10 or 11, **characterized in that** an ESD-protection layer (118) is deposited on the ion-sensitive layer (117), leaving a gate area (119) uncovered.

13. Method according to one of the claims 10 to 12, **characterized in that** a buffer layer (23) and an ESD-protection layer (218) are deposited on the ion-sensitive layer (217), leaving a gate area (219) uncovered.

## Revendications

1. Capteur électrochimique avec un ISFET et une structure de base FET comprenant une zone de source (25), une zone de drain (26) et un canal conducteur (13) agencé entre la zone de source (25) et la zone de drain (26) ; une première couche (21) formée directement sur la structure de base FET et recouvrant entièrement celle-ci ; une couche sensible aux ions (117, 217) formée sur la première couche (21) ; et une couche de protection ESD (118, 218) permettant d'isoler l'ISFET par rapport au fluide de mesure, à l'exception d'une zone de grille (119, 219, 319) ; **caractérisé en ce qu'**aussi bien la première surface de délimitation entre la structure de base FET et la première couche (21), que la deuxième surface de délimitation entre la première couche (21) et la couche sensible aux ions (117, 217), ainsi que la surface de la couche sensible aux ions (117, 217) sont formées essentiellement planes dans une zone de surface planaire, dans lequel la zone de surface planaire (34) s'étend au-delà d'une zone de surface intérieure (28) définie par une projection de la zone de source (25), de la zone de drain (26) et du canal conducteur (13) sur la zone de surface planaire.

2. Capteur électrochimique selon la revendication 1, **caractérisé en ce que** la première couche (21), la couche sensible aux ions (117, 217) et la couche ESD (118, 218) sont agencées dans des plans parallèles entre eux et à la structure de base FET, du moins dans la zone de surface planaire (34).

3. Capteur électrochimique selon l'une des revendications 1 ou 2, **caractérisé en ce que** l'ISFET comporte une couche tampon (23) agencée entre la couche sensible aux ions (217) et la couche de protection ESD (218).

4. Capteur électrochimique selon l'une des revendications 1 à 3, **caractérisé en ce que** le capteur électrochimique comporte un boîtier de capteur (1) avec un couvercle de boîtier (7), dans lequel le couvercle de boîtier (7) est agencé de telle manière par rapport à l'ISFET, que l'ISFET est entouré de façon étanche au fluide, à l'exception d'une zone de surface en contact avec le fluide (106, 306).

5. Capteur électrochimique selon l'une des revendications 1 à 4, **caractérisé en ce que** la zone de surface planaire (34) entoure la zone de surface intérieure (28) et la zone de surface en contact avec le fluide (106, 306).

6. Capteur électrochimique selon l'une des revendications 1 à 5, **caractérisé en ce que** l'ISFET comporte une épaisseur surélevée destinée à la mise en contact, à l'extérieur de la zone de surface planaire (34).

7. Capteur électrochimique selon l'une des revendications 1 à 6, **caractérisé en ce que** la première couche comprend une ou plusieurs couches partielles (31, 32).

8. Capteur électrochimique selon l'une des revendications 1 à 7, **caractérisé en ce que** la couche sensible aux ions (117, 217) comporte de l'alumine.

9. Capteur électrochimique selon l'une des revendications 1 à 8, **caractérisé en ce que** la couche de protection ESD (118, 218) est une couche métallique.

10. Procédé pour la fabrication d'un ISFET pour un capteur électrochimique selon l'une des revendications 1 à 9, comprenant au moins les étapes suivantes :
- réalisation d'une couche d'oxyde de champ (14) sur un substrat (12),
- formation et structuration d'une couche dopante (15, 16) sur une surface du substrat (12),
- dopage du substrat (12) par un recuit du substrat (12) et la couche dopante (15, 16) fermée sur celui-ci,
- enlèvement de la couche dopante (15, 16) et de la couche d'oxyde de champ (14) pour réaliser une zone de surface planaire (30),
- réalisation d'une première couche (21) constituée d'une ou de plusieurs couches partielles (31, 32),
- application d'une couche sensible aux ions (117, 217).

11. Procédé selon la revendication 10, **caractérisé en ce que** la couche dopante est constituée d'au moins une couche structurante et dopante n (16) et d'au moins une couche structurante et dopante p (15).

12. Procédé selon l'une des revendications 10 ou 11, **caractérisé en ce qu'**une couche de protection ESD (118) est appliquée sur la couche sensible aux ions (217), à l'exception d'une zone de grille (119) .

13. Procédé selon l'une des revendications 10 à 12, **caractérisé en ce qu'**une couche tampon (23) et une couche de protection ESD (218) sont appliquées sur la couche sensible aux ions (217), à l'exception d'une zone de grille (219).
